# EUROPEAN PATENT SPECIFICATION

(11) **EP 1 834 113 B1**
(45) Date of publication and mention of the grant of the patent: **02.11.2011**
(21) Application number: 05789400.8
(22) Date of filing: 27.09.2005
(51) Int. Cl.: F16H 59/36, F16H 59/68, H02P 9/04

(54) **Mechanical transmission system and method for controlling a variablel transmission**
Mechanisches Getriebesystem und Steuerungsverfahren für ein solches Getriebe
Système de transmission möcanique et procédé de commande correspondant

(30) Priority: 27.09.2004 CA 2479890
(43) Date of publication of application: 19.09.2007
(73) Proprietor: S.O.E. Technologies Inc., Ste-Julie (Québec) J3E 1Z8 (CA); Beaudoin, Samuel, Mont-Saint-Hilaire QC J3H 5W7 (CA)
(72) Inventor: BEAUDOIN, Samuel, Mont-Saint-Hilaire, Québec J3H 5W7 (CA)
(74) Representative: Plaçais, Jean Yves
(86) International application number: PCT/CA2005/001479
(87) International publication number: WO 2006/034582

(56) References cited:
- EP-A1- 0 643 474
- EP-A2- 0 447 801
- EP-A2- 0 464 406
- CA-A1- 2 312 984
- CA-A1- 2 315 127
- CA-C- 2 044 474
- GB-A- 0 201 628
- US-A- 4 382 188
- US-A- 5 073 157
- US-B1- 6 435 049

## Description

### FIELD OF THE INVENTION

The present invention generally relates to mechanical transmission systems and a method for controlling a variable transmission.

### BACKGROUND ART

Generator systems have been used for years to supply electrical power to a load from a source of mechanical energy, such as a power take-off (PTO) of an internal combustion engine, driving a permanent magnet generator. Since the load must generally be supplied with alternating current power at a substantially constant frequency (typically 50 or 60 Hz), the generator should then be driven at a fairly constant rosary speed (1800 r.p.m. for 60 Hz and 1500 r.p.m. for 50 Hz with a two pole generator). Otherwise an electronic frequency converter must be inserted between the generator and the load to regulate the electrical wave frequency (see for example US Patent No. 5,552,640 (Sutton et al. - Sept. 3, 1996 - British Gas plc). In view of eliminating the frequency converted, most generator systems therefore operate with diesel engines driven at constant speed, in a substantially high range to provide for the full generator rated power capacity at all time.

As emphasized by Sutton, operating the engine at constant speed has numerous disadvantages, which can be obviated by introducing an appropriate engine speed controller. Indeed, it is well known by one of ordinary skill in the art that an internal combustion engine should deliver a given power at a specific speed for optimal efficiency (output mechanical power/input fuel power). Hence, operating the engine at constant speed when load demand varies significantly yields higher fuel costs, increased emission of pollutants, higher noise level, and higher maintenance costs. It is therefore desirable to continuously adjust the engine speed as a function of the instant power demand at the load. Amongst numerous advantageous characteristics of such a system, full engine power may be available at the upper speed range to support heavy loads, while light loading may enable running the engine near idle level. This, however, raises the problem of continuously converting the variable speed of the engine into a constant speed drive to operate the generator at a steady frequency through a fixed ratio gearbox.

Cronin, in US Patent No. 4,382,188 (Lockheed Corp. - May 3, 1983) teaches that a continuously variable transmission (CVT) such as a toroidal drive may be used to enable a variable speed mechanical output from an engine to be converted to drive a permanent magnet generator at constant frequency, over a preselected engine speed range. Indeed, in a CVT, the ratio of the output speed of the drive from the transmission to the input speed of the drive applied to the transmission is continuously and infinitely variable between predetermined high and low ratio limits. However, Cronin's invention is meant to react to an intrinsically variable engine speed and has no view (scheme) of controlling said engine for efficiency purposes. In US Patent No. 5,539,258 (Sutton et al. - July 23, 1996 - British Gas plc) and in the European Patent No. 0 643 474 (Sutton - March 3, 1997 - British Gas plc), which represents the closest prior art, though, Sutton discloses a specific engine driven power generator system comprising a toroidal CVT and a computerized system to control the engine throttle and the continuous transmission ratio, so that when a change is detected in the load power demand, the engine speed is automatically set in the most efficient range corresponding to the measured power demand, based on a programmed engine efficiency map.

Although such a system may operate properly with slowly changing load power demand, it remains a substantial challenge to preserve the quality of the supplied current when sudden changes of load demand are experienced. This is mainly due to transients responsive to inertia and delays in the system. For example, the engine requires some rise time to accelerate to full speed when a load is suddenly applied and the throttle is fully opened. Reciprocally, the engine must not race when the load is being suddenly disconnected from the generator, and the engine and CVT must remain in stable mode at all time in spite of any variation of the power demand. Many engine/CVT systems have been developed which can perform satisfactorily in a vehicle, but none would complying with the requirements for an ac power generator destined to feed an electrical power network and run thousands of hours per year. It is also worth mentioning that most continuously variable transmissions and engine control devices have been developed for vehicles such as cars, boats, trains and planes. Therefore, most of them rely on hydraulic power or hydraulic devices for operation, and the affordable types are not built to sustain so many hours of cycling yearly. While hydraulics is a natural option for vehicles, costs for low production volumes and maintenance requirements make it undesirable for use in heavy duty power generators. Therefore, fully mechanical toroidal CVT's such as described in US Patent No. 3,581,587 (Dickenbrock - June 1, 1971 - General Motors Corp.) is contemplated as the type of CVT to be preferred for such an application. In a toroidal CVT, mechanical power is transmitted from an input toroidal disk to an output toroidal disk through a series of friction rollers running on the inner face of each disk at a controllable distance from the center thereof. Ratio is controlled by forcing the rollers to run on tracks of different diameters on each disk, the ratio of the diameters defining the transmission ratio. This fairly simple basic concept is well adapted to generator systems. However, improvements must be implemented into the earlier designs in order to make them reliable, tough and flexible enough to suit this demanding application.

Although the above examples show that some power generator systems of the prior art contemplated the use of a continuously variable transmission to enable variation of the engine speed to improve efficiency, these systems and transmission devices are nevertheless lacking important features necessary for them to provide practical, reliable and rugged, yet affordable solutions for the supply of stable electrical power, in frequency and voltage, to a variable load.

European Patent application No 0,447,801 A2 filed on February 14, 1991 and entitled "mechanically variable transmission" describes an infinitely variable speed transmission and engine that can be controlled to maintain the engine at full torque but at the lowest possible speed while varying the infinitely variable transmission ratio to maintain a constant or desired ground speed.

European Patent application No 0,464,406 A2 filed on June 11, 1991 and entitled "Method for controlling gear transmission for vehicle" described a control method where the transmission is first shifted into a high gear position to detect the actual vehicle running speed. A target gear position is then determined based on the actual vehicle running speed and the transmission is then shifted to this target gear position.

It would therefore be a significant advance in the art of power generation systems and mechanical transmission systems, to provide a transmission system enabling constant speed drive of an apparatus from a variable speed mechanical energy source, and a high efficiency generator system featuring engine speed modulation which can be advantageously used to supply a variable load with stable electrical power.

### SUMMARY OF INVENTION

An object of the present invention is therefore to provide a high efficiency transmission system and a method for controlling a variable transmission, obviating the limitations and drawbacks of the prior art devices and systems.

In accordance with the present invention, there is provided a system for transforming a variable output of a variable source of mechanical power into an input having a desired speed value for an apparatus, the system comprising: a transmission receiving the variable output and producing the input, the transmission having a variable ratio between a first speed of the output defined also as engine speed Vₑ and a second speed of the input defined also as generator speed V_{gen}; at least one sensor producing first speed data corresponding to the first speed, second speed data corresponding to the second speed, and power demand data corresponding to a power demand of the apparatus; a first controller receiving the first speed data, the second speed data and the power demand data, calculating an available power and a desired transmission ratio value based on the first speed data and the power demand data, classifying the system in one of at least first and second categories based on a first comparison of the second speed with a set range including the desired speed value and a second comparison of the available power with at least one threshold value, instructing the transmission to bring the variable ratio to the desired transmission ratio value rapidly when the system is in the first category, and instructing the transmission to bring the variable ratio to the desired transmission ratio value progressively when the system is in the second category; and a second controller receiving the second speed data and sending a speed correction signal to the source of mechanical power to change the first speed until the second speed data corresponds to the desired speed value.

Further in accordance with the present invention, there is provided a method for controlling a variable transmission having a variable ratio and transforming a variable output of a variable source of mechanical power into an input having a desired speed value for an apparatus, the method comprising the steps of: obtaining a first speed of the variable output defined also as engine speed Vₑ, a second speed of the input defined also as generator speed V_{gen}, and a power demand of the apparatus; calculating (1) an available power based on the first speed and the power demand, (2) a stability level of the input of the apparatus based on the second speed and the available power, (3) a desired ratio of the transmission based on the power demand, and (4) a desired rate of ratio change based on the stability level; instructing the transmission to change to the desired ratio at the desired rate of ratio change; and varying the first speed until the second speed is substantially equal to the desired speed value.

Other objects, advantages and features of the present invention will become more apparent upon reading of the following non-restrictive description of preferred embodiments thereof, given by way of example only with reference to the accompanying drawings.

### BRIEF DESCRIPTION OF THE DRAWINGS

In the appended drawings:
Figure 1 is schematic representation of a high efficiency generator system according to an embodiment of the present invention;
Figure 2 is a partial schematic representation of the high efficiency generator system of Figure 1, showing details of the engine controller;
Figure 3 is a partial schematic representation of the high efficiency generator system of Figure 1, showing details of the CVT controller;
Figure 4 is a flow chart showing the operations performed by the CVT controller of Figure 3;
Figure 5 is a longitudinal cross-sectional view of an example of a toroidal continuously variable transmission;
Figure 6a is a radial cross-sectional view of an example of a ratio control assembly of the transmission;
Figure 6b is a cross-sectional view of the assembly of Figure 6a taken from line BB;
Figure 7a is a side view of the ratio control assembly of Figure 6a showing actuating means thereof;
Figure 7b is a partial top view of the actuating means of Figure 7a;
Figure 8a is a top view of one roller assembly of the transmission of Figure 5 for a minimum underdrive ratio;
Figure 8b is a top view of the assembly of Figure 8a at a constant ratio of 1; and
Figure 8c is a top view of the assembly of Figure 8a for a maximum overdrive ratio.

Identical numerals in the drawings represent similar parts throughout the description.

### DESCRIPTION OF THE PREFERRED EMBODIMENTS

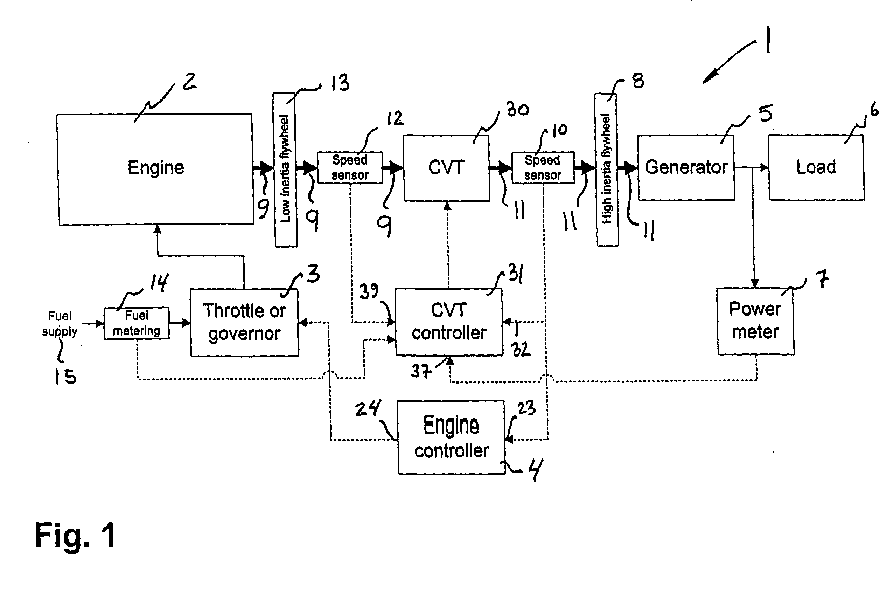

A continuously variable transmission system and a high efficiency generator system using same are generally identified by numeral 1, as illustrated in Figure 1. The system described hereinafter will provide a stable output to an apparatus from a variable source of mechanical power through the use of a continuously variable transmission system provided with an appropriate controller. Furthermore, it is contemplated that the system provide a stable rated electrical output from a generator while performing engine speed modulation according to instant electrical power demand to improve energetic efficiency in a generator system.

The continuously variable transmission system comprises a CVT device 30 comprising an input drive shaft 9 for connection to the output of a mechanical power source such as internal combustion engine 2. An input speed sensor 12 is responsive to the rotation speed of shaft 9 and provides an input speed signal of the transmission 30 or an output speed signal of the engine 2 to CVT controller 31, a key component of the continuously variable transmission system. CVT controller 31 further comprises a load power signal input device 37 to monitor the power demand at the output of a driven apparatus such as 5. A low inertia flywheel 13 is fixedly mounted to input drive shaft 9 to provide some damping of rotation speed variations of the mechanical power source (engine) 2. It may be integrated to the power source itself as it is generally the case for engines, but its inertia should be minimized (lower than in usual power generation systems and more like in vehicle engines of comparable power) to permit rapid reaction of the source when necessary.

The continuously variable transmission system further comprises an output drive shaft 11 for connection to a constant speed rated apparatus such as the input rotor shaft of an electrical power generator 5, for supplying stable electrical power to load 6. Again, an output speed sensor 10 is responsive to the rotation speed of shaft 11 and provides an output speed signal of the transmission 30, or input speed signal of the generator 5, to CVT controller 31. A high inertia flywheel 8 is fixedly mounted to output drive shaft 11 to provide a mechanical energy buffer which prevents sudden change in output speed, due to rapid change in load power demand or engine speed and assist engine 2 in increasing its speed faster when necessary. The energy stored in large inertia output flywheel 8 must be much greater than that of the low inertia input flywheel 13 to ensure proper dynamic behavior of the system. This provision is a key factor for enabling proper management of the transient conditions to ensure a stable transmission output, especially when engine speed modulation is being carried-out, as for energetic efficiency optimization.

Changes in rotary speed of output drive shaft 11 change the input rotation speed of the rotor in generator 5 which directly affects the frequency of the output electrical wave in the same proportion. Indeed, electrical output frequency is equal to the rotary speed (revolutions per second) times the number of poles (generally 2). For example, a two pole generator must be driven at exactly 1800 r.p.m. to produce a 60 Hz output wave. Output voltage may also be affected by fluctuations in rotary speed. Very limited variations of the electrical wave parameters can be tolerated from a generator system, especially when intended to supply an electrical network in case of power failure. Therefore, the system must be very stable and feature a high level of immunity to load demand fluctuations. This represents a real challenge while performing deliberate engine speed modulation according to energetic efficiency objectives.

In order to complete a functional high efficiency generator system, there is further provided an output power sensor (meter) 7 to supply a load power signal to the load power input device 37 of CVT controller 31. Furthermore, an engine controller 4 receives an output speed signal from output speed sensor 10 at input 23 and provides a speed control signal to throttle or governor 3 controlling the engine's speed, through output 24. Fuel supply 15 is supplied to throttle or governor 3, optionally through fuel metering device 14. It is pointed out that the engine speed control devices 3, 4, 15 are standard off-the-shelf items for generator systems.

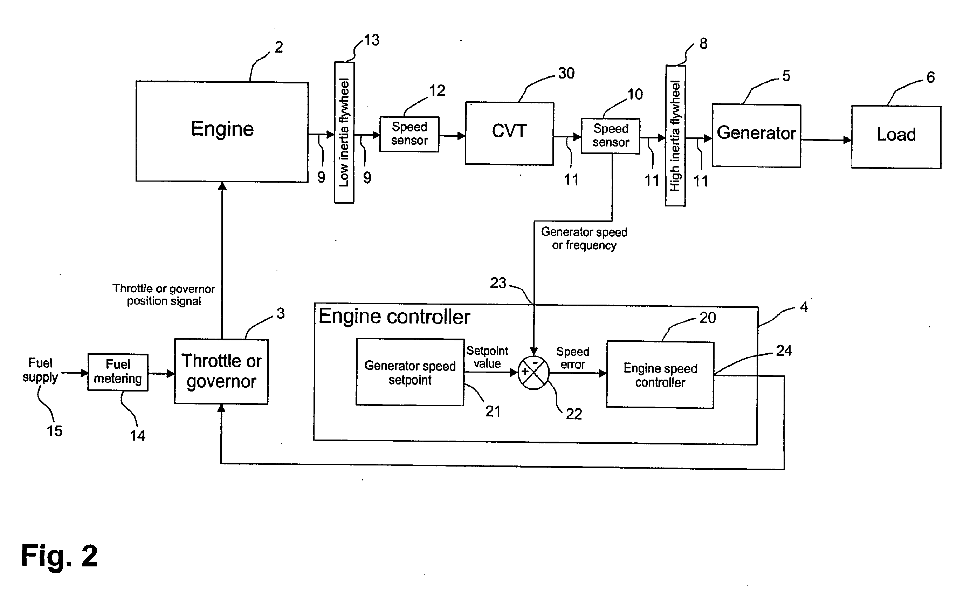

In a' classical mode of operation, wherein engine speed is intended to remain stable and match the generator speed set point, the input 23 of the engine controller 4 is rather connected to a speed sensor such as 12 indicating the instant motor speed. Though, the typical speed controller 4 illustrated in more details in Figure 2, most often merely compares the instant engine speed signal at input 23 to a generator speed set point signal 21 at comparator 22 which sends a speed error signal to engine speed controller 20, which in turn generates a control signal to actuate the throttle or governor 3 so to correct any deviation from the generator speed set point. In some cases of high-end engine controllers, the output power of the generator in also taken into account to improve performance. It is considered to use this type of engine controller with the system described herein.

In the present setup, the input 23 being connected to output speed sensor 10, monitoring the generator's rotary speed downstream from the CVT device 30, the standard engine controller 4 operates in the same manner, trying to maintain the generator's speed on the generator speed set point 21 (ex. 1800 r.p.m. for a 60 Hz electrical output), controlling the speed of engine 2 regardless of the behavior of CVT device 30. Therefore, all of the variable speed control required to provide the high efficiency generator system resides in the CVT controller 31 of the continuously variable transmission system.

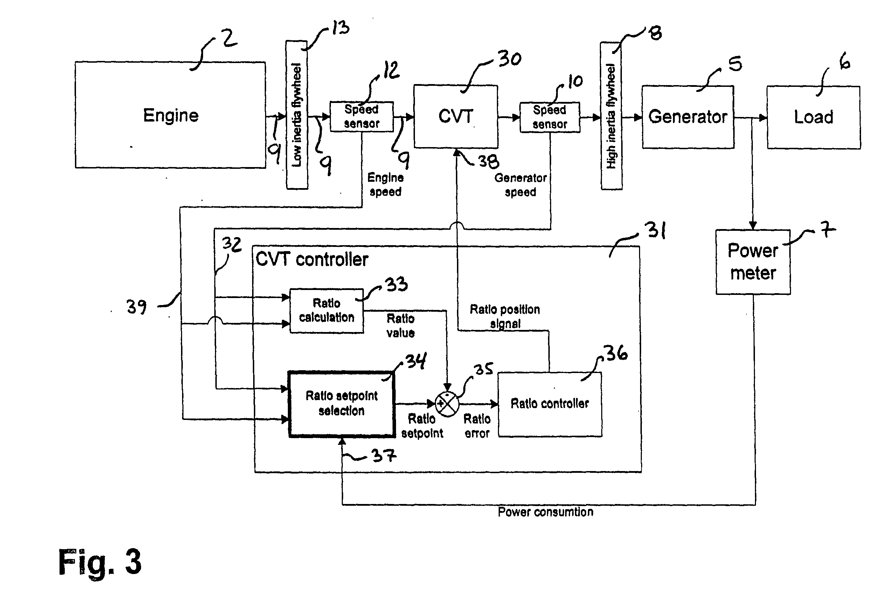

As seen from Figure 3, where all engine control devices have been removed for more clarity, the CVT controller 31 is comprised of two main devices: the ratio control section comprising ratio controller 36, ratio monitoring device 33 and deviation evaluation device 35, and the ratio set point selection section represented by device 34. The ratio control section receives a ratio set point from ratio set point selection device 34, and compares it in deviation evaluation device 35 with the actual ratio value provided by the ratio monitoring (calculation) device 33 connected to the input speed sensor 12 and the output speed sensor 10. Obviously the actual ratio is obtained by dividing the output speed value by the input speed value. The actual ratio value is then subtracted from the ratio set point value in deviation evaluation device 35 to yield a deviation signal being sent to the ratio controller 36 which generates the appropriate ratio position signals to drive the actuators in the CVT device 30 to minimize the deviation with respect to the calculated ratio set point. Therefore, the ratio set point selection device 34 is the most critical section of the CVT controller, wherein the effective control of the engine 2 and the generator system 1 takes place for optimal system performance.

In order to optimize the engine speed, the ratio set point selection in device 34 must be performed in such a manner that for a given power demand from the generator 5, the CVT device will force the engine 2 to run at its most energy efficient speed. Moreover, upon changing power demand from the generator 5, the ratio set point must be adjusted so to minimize the amplitude of frequency and voltage transients in the output electrical wave produced by the generator 5 and supplied to the load 6. To that effect, the generator speed must remain as stable as possible. All of these challenges are faced by the control strategy implemented in the ratio set point selection device 34.

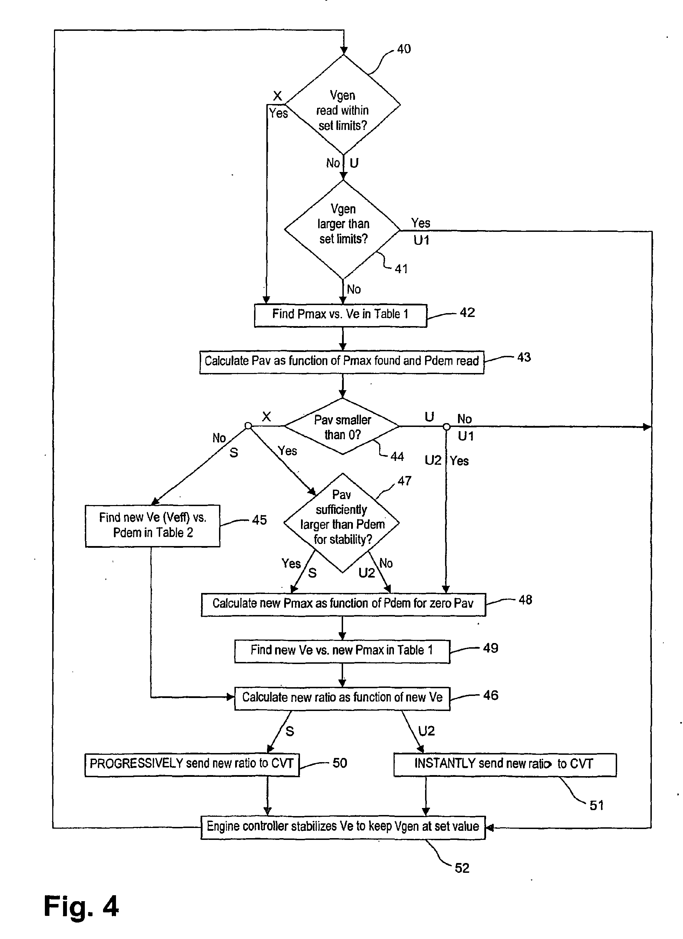

Referring to Figures 3 and 4, the control method implemented mostly in the ratio set point selection device 34 to achieve engine speed optimization and generator output linearity will now be described. The process chart of Figure 4 represents an infinite loop accomplished many times a second by an electronic controller (e.g., a processor), such as a PID, in the ratio set point selection device 34. The process is as follows:

First, the speed sensor 10 reads the generator speed Vgen and communicates the generator speed Vgen to the ratio set point selection device 34 through a speed signal 32. Then, as shown in decision 40, the ratio set point selection device 34 compares the generator speed Vgen to a programmed acceptable range including a set point speed, e.g., 1500 r.p.m. or 1800 r.p.m. The set point speed is an operational value selected as a function of the desired output parameters. As described previously, the set point speed is, for instance, selected as a function of a desired frequency of the generator 5. Accordingly, the sensor 10 can send a frequency signal to the ratio set point selection device 34, which is compared to a frequency range including a set point, e.g., 50 Hz or 60 Hz.

If the generator speed Vgen is within the acceptable range (i.e., set limits), the stability level of the system is unknown at this point (case X), and the ratio set point selection device 34 proceeds to step 42. If the generator speed Vgen is out of the programmed range or set limits, the system is deemed unstable (case U) and the ratio set point selection device 34 proceeds to decision 41.

As indicated in decision 41, if the generator speed Vgen is out of the programmed range or set limits (case U), the ratio set point selection device 34 determines if the speed signal 32 is lower or higher than the set limits. If the speed signal 32 is higher than the set limits, than the CVT controller 31 does not need to intervene even though the system is unstable (case or category U1); the engine controller 4 (see Figure 2) will react by reducing and stabilizing the speed Ve of the engine 2 until the generator speed Vgen reaches the set point, as shown in step 52, and the ratio set point selection device 34 restarts the loop at step 40.

If at step 41 the ratio set point selection device 34 determines that the generator speed Vgen is lower than the set limits, or if at step 40 the ratio set point selection device 34 determines that the generator speed Vgen is within the set limits, the power meter 7 communicates the power demand Pdem to the ratio set point selection device 34 through a power consumption signal 37, and the speed sensor 12 communicates the speed of the engine Ve to the ratio set point selection device 34 through a speed signal 39.

The ratio set point selection device 34 is provided with a database and, according to step 42, accesses a first programmed data table from the database to extract a value for a maximum engine power Pmax corresponding to the engine speed Ve. Then, as shown in step 43, the ratio set point selection device 34 calculates available power Pav based on the maximum engine power Pmax for the engine speed Ve and the power demand Pdem.

In a preferred embodiment, the available power Pav corresponds to the maximum engine power Pmax minus the power demand Pdem minus a safety factor providing some power reserve to sustain eventual sudden increases in power demand Pdem from the generator 5.

Then, as shown in step 44, the ratio set point selection device 34 evaluates if the available power Pav is lower than a first threshold. A preferred value for the first threshold is 0, such that only the power needed to sustain a sudden increase in power demand Pdem is available, i.e. the safety factor.

In the case where the generator speed Vgen is within the set limits (case X) and the available power is evaluated at decision 44 to be equal to or above the first threshold (e.g., 0), the system is stable (case or category S), whereby the available power Pav is sufficient, and the system may enter an energy-efficient, or economy, mode at step 45.

In step 45, the ratio set point selection device 34 accesses a second programmed data table of the database to extract an optimal engine speed Veff corresponding to the power demand Pdem. The optimal engine speed Veff provided by the second data table is the speed at which the engine 2 should be driven in order to be as efficient as possible for a given power demand Pdem of the generator 5. Preferably, the optimal engine speed Veff represents a compromise between the best efficiency speed value and a minimal value for being able to maintain the generator 5 in stable conditions (i.e. constant speed Vgen) in case of a sudden increase in power demand Pdem, e.g., 100% of the system's rated capacity.

As a practical example, if the power demand Pdem is 0 (i.e., no load), energy concerns would suggest bringing the engine speed Ve to its lower idle level, e.g., approx. 500 r.p.m., in view of the operating range of the transmission 30. However, with the engine speed Ve at idle level, if a full load were to be suddenly applied, the engine 2 would not be able to rise its speed Ve fast enough to maintain the generator speed Vgen within the set limits. For that reason, in programming the second data table, the optimal engine speed Veff for a power demand of 0 could be, for example, 1000 r.p.m. such that the engine 2 is able to react to a sudden load adequately, minimizing a duration and intensity of a transient response. Thus, the optimal engine speed Veff obtained from the second data table is the speed Ve at which the system should be operated for optimal efficiency and functionality at a given power demand Pdem. The second data table may be programmed taking into consideration the expected behavior of the load 6.

Then, according to step 46, the ratio set point selection device 34 calculates a new transmission ratio which will correspond to the ratio between the optimal engine speed Veff found in the second data table and the generator speed Vgen at the set value. The ratio set point selection device 34 sends the new transmission ratio to the deviation evaluation device 35.

The deviation evaluation device 35 also receives the actual transmission ratio from the ratio calculation device 33, calculated from the engine speed signal 39 provided by the sensor 12 and the generator speed signal 32 provided by the sensor 10.

As shown in step 50, since the system is stable, the ratio set point selection device 34 instructs the ratio controller 36 through the deviation evaluation device 35 to slowly correct the transmission ratio. The ratio controller 36 thus sends a ratio correction signal 38 to the CVT transmission 30, causing the transmission ratio to progressively reach the new transmission ratio calculated by the ratio set point selection device 34. The ratio correction is thus performed slowly, i.e. incrementally at each execution of the loop, so as to maintain stability and let the engine controller 4 adjust the engine speed Vgen following transmission ratio changes, as shown in step 52. Then, the ratio set point selection device 34 restarts the loop at decision 40.

As indicated in decision 47, in the case where the generator speed Vgen is within the set limits (case X) and the available power is evaluated in decision 44 to be lower than the first threshold, e.g., 0, the ratio set point selection device 34 compares the maximum engine power Pmax found in the first data table to the power demand Pdem, to determine if the maximum power Pmax is sufficiently larger than the power demand Pdem for the system to be stable even if the available power Pav is lower than the first threshold. In other words, the ratio set point selection device 34 determines if the system has an adequate safety margin, or safety factor, allowing the engine 2 to adequately compensate in case of a sudden load increase of the generator 5, with a minimal transitory period. This can be done, for example, by comparing the available power Pav (which is a function of the maximum engine power Pmax and the power demand Pdem) to a second threshold lower than the first threshold, the second threshold representing the chosen safety factor.

If at decision 47 the available power Pav is at least equal to the second threshold, i.e. the maximum engine power Pmax is sufficiently larger than the power demand Pdem, the system is stable (case S). As seen in step 48, the ratio set point selection device 34 calculates a new value for the maximum engine power Pmax, based on the power demand Pdem, which would produce an available power Pav at least equal to the first threshold (e.g., 0).

Then, as shown in step 49, the ratio set point selection device 34 accesses the first data table of the database to extract the value of the new engine speed Ve corresponding to this new value for the maximum engine power Pmax. This new engine speed Ve will enable the engine 2 to have the safety margin or factor allowing adequate compensation in case of a sudden load increase of the generator 5 with a minimal transitory period.

The previously described steps 46, 50 and 52 are then performed, that is, the ratio set point selection device 34 calculates a new transmission ratio corresponding to the new engine speed Ve found (step 46), sends the new transmission ratio to the ratio controller 36 which sends a ratio correction signal 38 to the CVT transmission 30 causing the transmission ratio to progressively reach the new transmission ratio (step 50), and the engine controller 4 adjusts the engine speed Ve following transmission ratio changes to maintain Vgen at the set value (step 52). The ratio set point selection device 34 then restarts the loop at step 40.

On the other hand, if at decision 47 the available power Pav is determined to be lower than the second threshold, i.e. the maximum engine power Pmax is not sufficiently larger than the power demand Pdem as determined by the ratio set point selection device 34, the system is anticipated to become unstable (case U2). Thus, the engine speed Ve must be increased rapidly in order to bring the system back in stable mode as soon as possible. The first steps performed are the same as when the available power Pav is at least equal to the second threshold, i.e. the ratio set point selection device 34 calculates a new value for the maximum engine power Pmax which would produce an available power Pav at least equal to the first threshold (step 48), extracts the corresponding new engine speed Ve value from the first data table (step 49), and calculates a new transmission ratio corresponding to the new engine speed Ve found (step 46).

However, as shown in step 51, since the system is unstable (case U2), the ratio set point selection device 34 instructs the ratio controller 36 to immediately correct the transmission ratio, and the ratio controller 36 sends a ratio correction signal 38 to the CVT transmission 30 causing the transmission ratio to immediately be changed to the new transmission ratio.

This is where the energy stored in high inertia output flywheel 8 is useful, being partly delivered to the system, to assist engine acceleration. As a consequence, the speed of the flywheel 8 is reduced and the generator speed Vgen is decreased following that of the output drive shaft 11 on which the flywheel 8 is mounted. The speed reduction at drive shaft 11 is detected by the engine controller 4 which reacts and turns the engine 2 to full throttle mode. Thus, the system can rapidly recover from a transitory lack of power and be maintained as stable as possible. The ratio set point selection device 34 then restarts the loop at step 40.

Similarly, if in the case where the generator speed Vgen is below the set range (case U), it is determined at decision 44 that the available power Pav is lower than the first threshold, the system is unstable (case or category U2). Accordingly, the steps performed are the same as the steps described above for the case where the generator speed Vgen is within the set range (case X) and at decision 47 it is determined that the available power Pav is below the second threshold. In other words, the ratio set point selection device 34 calculates a desired value for the maximum engine power Pmax which would produce an available power Pav at least equal to the first threshold (step 48), extracts the corresponding new engine speed Ve value from the first data table (step 49), calculates a new transmission ratio corresponding to the new engine speed Ve found (step 46), and instructs the ratio controller 36, which instructs the CVT transmission 30, to immediately change the actual transmission ratio for the new transmission ratio (step 51), taking advantage of the energy stored in high inertia output flywheel 8. The engine controller 4 reacts and increases the engine speed Ve to stabilize the generator speed (52), and the ratio set point selection device 34 restarts the loop at step 40.

Finally, if in the case where the generator speed Vgen is below the set range (case U), it is determined at decision 44 that the available power Pav is at least equal to the first threshold, the system is unstable but the CVT controller 31 does not need to intervene (case U1). The engine controller 4 uses the available power Pav to correct the engine speed Ve in order to stabilize the generator speed Vgen to the set value (step 52), and the ratio set point selection device 34 restarts the loop at step 40.

This completes the description of the control method implemented in the ratio set point selection device. In summary, in the system 1, the CVT controller 31 evaluates the stability level of the system based on the generator speed Vgen and the available power Pav, and classifies the system in one of three categories: a stable system (S), an unstable system that can be stabilized by the engine controller 23 alone (U1), or an unstable system that needs to be stabilized by the CVT controller 31 (U2). The controller 31 also evaluates a rate of transmission ratio change appropriate based on the stability level: if the system is stable, the ratio is changed progressively (e.g. incrementally), and if the system is unstable, the ratio is changed rapidly (e.g. instantaneously). Thus, the CVT controller 31 forces the engine 2 to progressively adopt speeds at which it is most efficient when the system is considered stable (S), and to rapidly adopt speeds at which it is the most powerful in transitory, or unstable, mode (U2). This performs a rough speed control leaving to the engine speed controller 4 perform a fine control, by adjusting combustion parameters, to stabilize the speed at the output of the engine/CVT tandem, to ensure that the generator frequency or speed is as stable as possible, and the supplied electrical wave meets the standards.

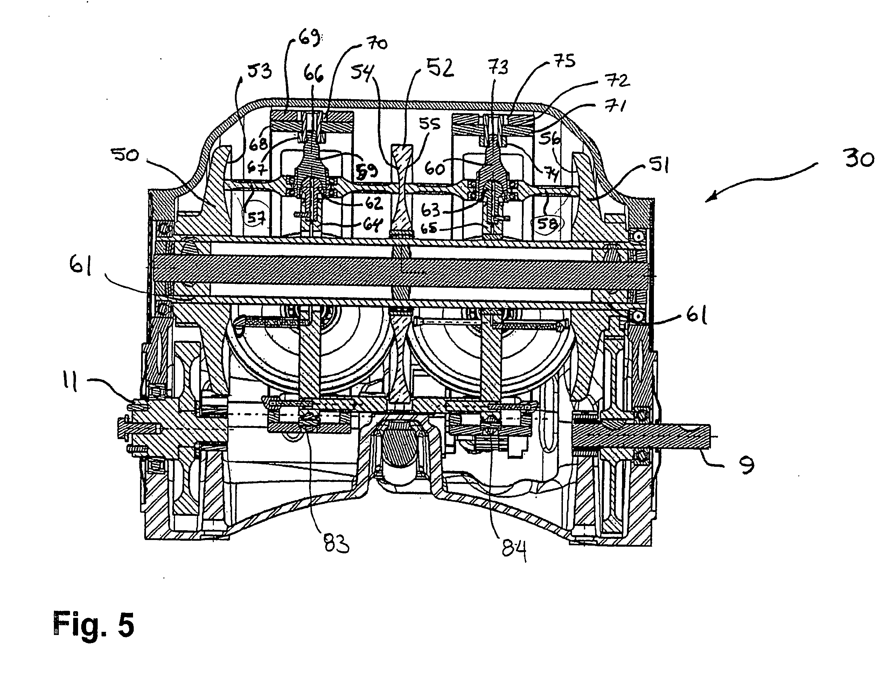

Turning now to Figure 5, the CVT device 30, responsible for changing the ratios as directed by the set point selection device 34 and the ratio controller 36 will now be described in more detail.

The CVT device 30 is preferably a dual stage toroidal cavity roller-type continuously variable ratio transmission. In many aspects, the transmission is comparable to those of the prior art, and one may refer to US Patent No. 3,581,587 (Dickenbrock - June 1, 1971 - General Motors Corp.) or CA- patent application No. 2,401,474 (Careau et al. - published March 5, 2004 - assigned to École de Technologie Supérieure) for a detailed description of its basic operation. Nevertheless, some significant improvements are contemplated in the present invention to provide an easily controllable roughed device for use in industrial applications such as electrical power generation. This type of transmission is preferred over other types such as hydrostatic CVT's since no hydraulics is required for its operation, which reduces both costs and maintenance. Moreover, toroidal transmissions usually have a significantly higher efficiency when compared to hydrostatic transmissions.

Generally stated, the transmission comprises a pair of outer input toroidal disks 50 and 51 fixedly mounted on rotary axle 61 and driven through input shaft 9 which is driven by the engine 2, and an inner double sided output toroidal disk 52 rotatably mounted about axle 61 and driving output shaft 11 through an output gear stage, thus driving the generator 5. Alternatively, the rotary axle 61 driving the outer toroidal disks 50,51 can be connected to the output shaft 11, thus driving the generator 5, and the inner toroidal disk 52 can be driven by the engine 2 through the input shaft 9.

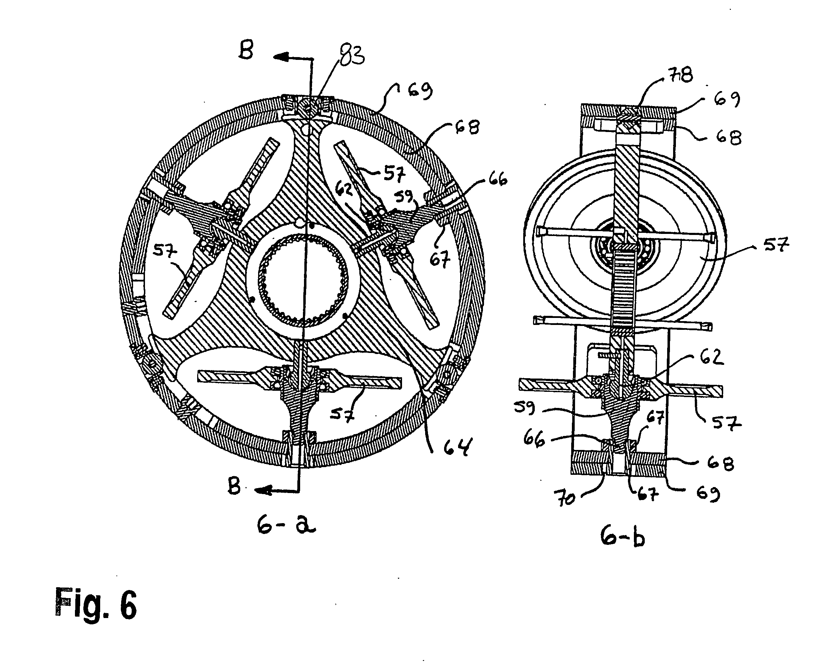

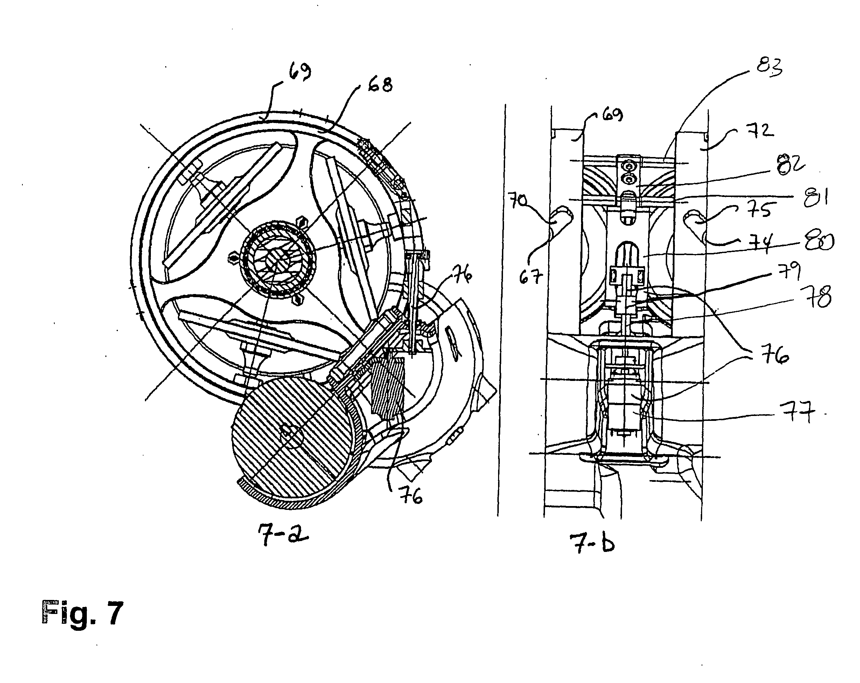

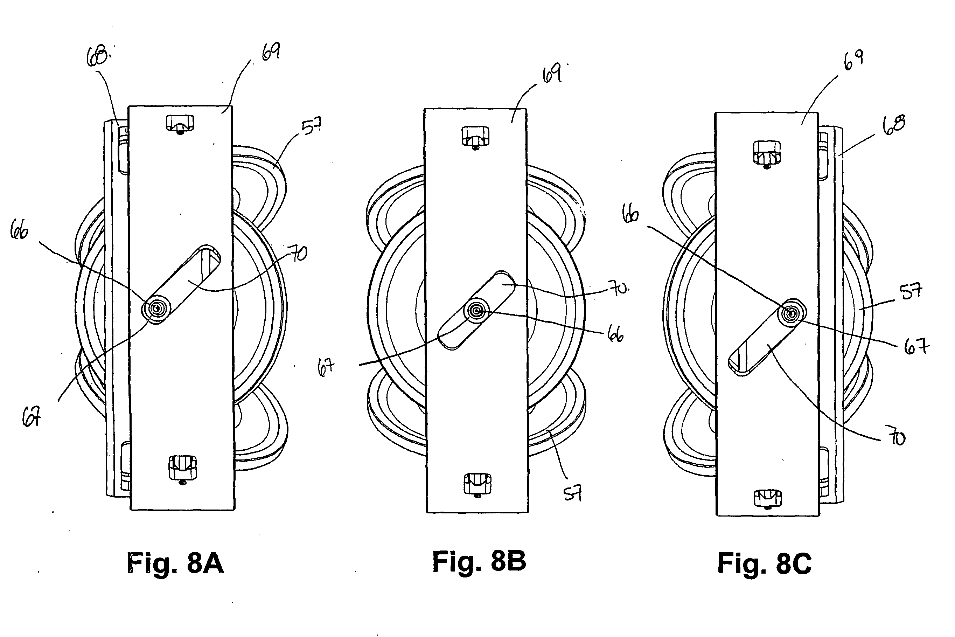

The toroidal disks 50,51,52 are provided with respective toroidal cavity races 53,54 and 55,56. Rotary power is symmetrically transferred from the outer input disks 50 and 51, connected through axle 61, to the inner output disk 52 through friction rollers such as 57 and 58, rotatably mounted on axially extending carriers 59,60 and running on and between two opposite races, transferring rotary power from one to the other (from outer races to inner races). A plurality of friction rollers 57,58, preferably three, are provided between each pair of races 53-54, 55-56, with their carriers 59,60 pivotally mounted on ball-shaped joints 62,63 extending from a common spider hub 64,65 rotatably mounted on axle 61 and fixedly connected to the transmission's housing. Alternatively two, four or even more rollers 57,58 can be provided between each pair of races 53-54 and 55-56. The distal ends 66,73 of the carriers 59,60 of a given set of rollers 57,58 are slidably assembled to a pair of coaxial circular rings, inner ring 68,71 and outer ring 69,72, also coaxial to axle 61 and mounted at the outer perimeter of the spider hub 64,65 (see Figure 6a). The outer ring 69,72 is mounted on spider hub 64,65 through a series of rollers 83,84, one at the end of each arm of the spider hub 64,65, which enable a limited radial movement but prevent any axial movement of the outer ring 69,72 with respect to the fixed spider hub 64,65. Outer ring 69,72 is provided with three slots 70,75 (see particularly Figures 8a-8c) acting as guiding sleeves or cams for guiding the displacement of distal ends 66,73 of carriers 59,60 which are connected in three bushings 67,74 provided in the inner ring 68,71, each bushing 67,74 extending in a slot 70,75 from which a displacement force is transmitter thereto, and in turn to the distal ends 66,73. The inner ring 68,71 is thus connected to outer ring 69,72 and axially and radially movable with respect to said outer ring 69,72. The slots 70,75 and corresponding bushings 67,74 are provided 120 degrees apart over the circumference of the outer and inner rings 69,72; 68,71 respectively. Figures 6 and 7a-7b provide detailed radial cross-sectional -views of the dual ring ratio control mechanism.

In operation, transmission ratio variations are carried-out by tilting the friction rollers 57,58 through displacement of the distal end 66,73 of the carriers 59,60 so that each roller 57,58 runs on a circular track of a different diameter on each opposite race 53-54 and 55-56. The ratio of the track diameters gives the transmission ratio for that given pair of disks, 50-52 and 51-52 (see Figures 8a-8c for different ratios). Displacement of the distal ends 66,73 is advantageously provided through a rotation of the outer ring 69,72 about axle 61, causing a radical force component on the inner ring 68,71 which holds the distal end 66,73 of the carriers 59,60. This rotation is thus causing the distal ends 66,73 to force a tilt of the carriers 59,60 about the ball shaped joint 62,63. Thus the friction rollers 57,58 no longer run on a circular track but on a spiral track that, because of the opposite rotation of the pair of disks 50 (51) and 52, moves the roller's contact points up and down about the axle 61. The result of this movement of the frictions rollers 57,58 is a ratio change that force a rotation of the carriers 59,60 about the ball shaped joint 62,63. This rotation is now in a plane perpendicular to the prior tilt plane caused by the prior rotation of the outer ring 69,72, thus this rotation of the three carriers 59,60 of the same toroidal cavity moves the distal ends 66,73 and forces an axial movement of the inner ring 68,71. However, because the inner ring 68,71 can only move according to the three slots 70,75, this axial movement is also transferred to a rotational movement of the inner ring 68,71 about the axle 61 and in the opposite direction of the first outer ring's 69,72 rotation that initiated the ratio change. Once again, this rotation causes the distal ends 66,73 to force a tilt back of the carriers 59 about the ball shaped joint 62,63 and then the three friction rollers 57,58 of the same toroidal cavity no longer run on a spiral track but are back on a circular track and thus on a fixed ratio bringing the transmission back in steady state (see Figures 8a to 8c). An advantage of this arrangement is that all three rollers 57,58 of a trio are automatically moved in perfect synchronism and with high accuracy because the distal ends 66,73 of the carriers 59,60 are all linked in the precisely machined inner ring 68,71. The radial displacement of the outer rings 69,72 is advantageously accomplished using a. single electrically driven linear actuator 76 such as a DC motor/endless-screw tandem, a solenoid or the like, which is a second advantage. Such an electrical device 76 can be easily controlled using the electrical signals generated by the ratio controller 36 of CVT controller 31.

As illustrated in Figure 7, a single linear actuator 76 is advantageously used to simultaneously control the displacement of both outer rings 69, 72, and keep the ratio equal in both stages of the transmission 30. The actuator 76 comprises a DC geared motor 77 driving an endless screw 78 threadingly engaged in a nut 79. The nut 79 is connected to a first arm 80, which is connected through a first pin 81 to a second arm 82 at a first end thereof. The second arm 82 is connected at its second end to a second pin 83. Both the first and second pins 81,83 interconnect the two outer rings 69,72. thus, upon reception of the ratio position signal 38 from the ratio controller 36 (see Figure 3), the motor 77 rotates the endless screw 78, which in turn translates the nut 79, which produces a translation of the first and second arms 80,82 rotating the outer rings 69,72 through the first and second pins 81,83 in a coordinated manner. The actuator 76 allows for easy and coordinated control of the ratio in both stages of the transmission 30, as opposed to traditional CVT actuators which are usually hydraulically powered and as such less energy efficient, more costly and less durable.

In addition, the coordinated control of the ratio in both stages provided by the actuator 76 actuating together both outer rings 69,72, which are precisely machined and interconnected by pins 81,83, produces an improved ratio conformity between the stages which leads to an substantially high mechanical efficiency of the transmission 30.

One can thus easily appreciate that the above described embodiments according to the present invention provide a transmission system enabling constant speed drive of an apparatus from a variable speed mechanical energy source, and a high efficiency generator system featuring engine speed modulation which can be advantageously used to supply a variable load with stable electrical power an be advantageously used in miscellaneous filing applications.

The embodiments of the invention described above are intended to be exemplary. The transmission 30 and controllers 23, 31 could be used to provide a constant speed input to various types of apparatus from a variable speed output produced by a various types of sources, or to provide a variable speed input to an apparatus from a constant speed output produced by a source. One example of the latter is having an electric motor producing a constant speed output and a conveyor receiving a variable speed input from the transmission. Accordingly, the present invention is intended to embrace all such alternatives, modifications and variances which fall within the scope of the appended claims.

## Claims

1. A system for transforming a variable output of a variable source of mechanical power (2) into an input having a desired speed value for an apparatus (5), the system comprising:
a transmission (30) receiving the variable output and producing the input, the transmission having a variable ratio between a first speed of the output defined also as engine speed Vₑ and a second speed of the input defined also as generator speed V_{gen};
at least one sensor (12, 10, 7) producing first speed data corresponding to the first speed, second speed data corresponding to the second speed, and power demand data corresponding to a power demand of the apparatus;
a first controller (31) receiving the first speed data, the second speed data and the power demand data, calculating an available power and a desired transmission ratio value based on the first speed data and the power demand data, classifying the system in one of at least first and second categories based on a first comparison of the second speed with a set range including the desired speed value and a second comparison of the available power with at least one threshold value, instructing the transmission to bring the variable ratio to the desired transmission ratio value rapidly when the system is in the first category, and instructing the transmission to bring the variable ratio to the desired transmission ratio value progressively when the system is in the second category; and
a second controller (4) receiving the second speed data and sending a speed correction signal to the source of mechanical power to change the first speed until the second speed data corresponds to the desired speed value.

2. The system according to claim 1, wherein the first controller (31) classifies the system in one of the first category, the second category, and a third category based on the first and second comparisons, and the first controller (31) refrains from instructing the transmission to change the variable ratio when the system is in the third category.

3. The system according to claim 2, wherein the first controller (31) classifies the system in the third category when the second speed is higher than the set range.

4. The system according to anyone of claims 2 and 3, wherein the first controller (31) classifies the system in the third category when the first speed is below the set range and the available power P_{AV} is higher than the at least one threshold value.

5. The system according to anyone of claims 1 to 4, wherein the first controller (31) classifies the system in the first category when the first speed is below the set range and the available power P_{AV} is lower than the at least one threshold value.

6. The system according to anyone of claims I to 5, wherein the first controller (31) classifies the system in the first category when the first speed is within the set range and the available power P_{AV} is lower than the at least one threshold value.

7. The system according to anyone of claims I to 6, wherein the at least one threshold value includes a first threshold value, and wherein the first controller (31) classifies the system in the second category when the second speed is within the set range and the available power P_{AV} is higher than the first threshold value.

8. The system according to claim 7, wherein the at least one threshold value further includes a second threshold value higher than the first threshold value, and the first controller (31) calculates an energy efficient value for the first speed based on the power demand data and calculates the desired transmission ratio value based on the energy efficient value for the first speed when the system is classified in the second category and the available power P_{AV} is higher than the second threshold value.

9. The system according to anyone of claims 1 to 8, wherein the first (31) and second (4) controllers operate independently.

10. The system according to anyone of claims 1 to 9, wherein the transmission (30) is a toroidal continuously variable transmission.

11. The system according to anyone of claims I to 10 wherein the transmission (30) includes a shaft (11) producing input and a high inertia flywheel (8) mounted on the shaft (11).

12. The system according to anyone of claims 6 to 11, wherein the source (2) is an internal combustion engine and the apparatus (5) is an electrical generator.

13. A method for controlling a variable transmission (30) having a variable ratio and transforming a variable output of a variable source of mechanical power (2) into an input having a desired speed value for an apparatus (5), the method comprising the steps of:
obtaining a first speed of the variable output defined also as engine speed Vₑ a second speed of the input defined also as generator speed V_{gen} and a power demand P_{dem} of the apparatus;
calculating an available power P_{AV} based on the first speed and the power demand P_{dem} a stability level of the input of the apparatus (5) based on the second speed and the available power P_{AV} a desired ratio of the transmission (30) based on the power demand P_{dem}, and a desired rate of ratio change based on the stability level;
instructing the transmission to change to the desired ratio at the desired rate of ratio change; and
varying the first speed until the second speed is substantially equal to the desired speed value.

14. The method according to claim 13, further comprising:
calculating a desired maximum power value Pₘₐₓ of the source (2) based in the power demand P_{dem}, extracting a desired value for the first speed from a data table based on the desired maximum power value Pₘₐₓ, and calculating the desired transmission value based on the desired value for the first speed.

15. The method according to claim 13, wherein at a given stability level and with the available power P_{AV} higher than a given threshold a desired value for the first speed is extracted from a data table based on the power demand P_{dem}, the desired value representing an energy efficient speed, of the source (2) while maintaining the available power P_{AV} at a desired level.

## Patentansprüche

1. System zum Umwandeln eines veränderbaren Abtriebs einer veränderbaren mechanischen Kraftquelle (2) in einen Antrieb mit einem gewünschten Drehzahlwert für eine Vorrichtung (2), wobei das System umfasst:
ein Getriebe (30), das den veränderbaren Abtrieb erhält und den Antrieb erzeugt, wobei das Getriebe ein veränderbares Übersetzungsverhältnis zwischen einer ersten Drehzahl des Abtriebs, die auch als Maschinendrehzahl Vₑ definiert ist, und einer zweiten Drehzahl des Antriebes hat, die auch als Generatordrehzahi Gen definiert ist,
wenigstens einen Sensor (12, 10, 7), der erste Drehzahldaten entsprechend der ersten Drehzahl, zweite Drehzahldaten entsprechend der zweiten Drehzahl und Leistungsbedarfsdaten entsprechend eines Leistungsbedarfes der Vorrichtung erzeugt,
eine erste Steuereinheit (31), die die ersten Drehzahldaten, die zweiten Drehzahldaten und die Leistungsbedarfsdaten empfängt, eine verfügbare Leistung und einen gewünschten Übersetzungsverhältniswert auf der Basis der ersten Drehzahldaten und der Leistungsbedarfsdaten berechnet, das System in eine erste und/oder eine zweite Kategorie auf der Basis eines ersten Vergleiches der zweiten Drehzahl mit einem eingestellten Bereich, der den gewünschten Drehzahlwert enthält, und eines zweiten Vergleiches der verfügbaren Leistung mit wenigstens einem Schwellenwert klassifiziert, das Getriebe anweist, das veränderbare Übersetzungsverhältnis schnell auf den gewünschten Übersetzungsverhältniswert zu bringen, wenn sich das System in der ersten Kategorie befindet, und das Getriebe anweist, das veränderbare Übersetzungsverhältnis progressiv auf den gewünschten Übersetzungsverhältniswert zu bringen, wenn sich das System in der zweiten Kategorie befindet; und
eine zweite Steuereinheit (4), die die zweiten Drehzahldaten empfängt und ein Drehzahlkorrektursignal zu der mechanischen Kraftquelle sendet, um die erste Drehzahl solange zu ändern, bis die zweite Drehzahl dem gewünschten Drehzahlwert entspricht.

2. System nach Anspruch 1, bei dem die erste Steuereinheit (31) das System in die erste Kategorie und/oder die zweite Kategorie und/oder eine dritte Kategorie auf der Basis des ersten und des zweiten Vergleiches klassifiziert und die erste Steuereinheit (31) verhindert, dass die Übersetzung das veränderbare Übersetzungsverhältnis ändert, wenn sich das System in der dritten Kategorie befindet.

3. System nach Anspruch 2, bei dem die erste Steuereinheit (31) das System in die dritte Kategorie klassifiziert, wenn die zweite Drehzahl höher ist als der eingestellte Bereich.

4. System nach einem der Ansprüche 2 und 3, bei dem die erste Steuereinheit (31) das System in die dritte Kategorie klassifiziert, wenn die erste Drehzahl unter dem eingestellten Bereich ist und die verfügbare Leistung P_{AV} größer ist als der wenigstens eine Schwellenwert.

5. System nach einem der Ansprüche 1 bis 4, bei dem die erste Steuereinheit (31) das System in die erste Kategorie klassifiziert, sofern die erste Drehzahl geringer ist als der eingestellte Bereich und die verfügbare Leistung P_{AV} geringer ist als der wenigstens eine Schwellenwert.

6. System nach einem der Ansprüche 1 bis 5, bei dem die erste Steuereinheit (31) das System in die erste Kategorie klassifiziert, wenn die erste Drehzahl innerhalb des eingestellten Bereiches ist und die verfügbare Leistung P_{AV} geringer ist als der wenigstens eine Schwellenwert.

7. System nach einem der Ansprüche 1 bis 6, bei dem der wenigstens eine Schwellenwert einen ersten Schwellenwert umfasst und die erste Steuereinheit (31) das System in die zweite Kategorie klassifiziert, wenn die zweite Drehzahl innerhalb des eingestellten Bereiches liegt und die verfügbare Leistung P_{AV} größer ist als der erste Schwellenwert.

8. System nach Anspruch 7, bei dem der wenigstens eine Schwellenwert weiterhin einen zweiten Schwellenwert enthält, der größer ist als der erste Schwellenwert, und die erste Steuereinheit (31) einen Energieeffizienzwert für die erste Drehzahl auf der Basis der Leistungsbedarfsdaten und den gewünschten Übersetzungsverhältniswert auf der Basis des Energieeffizienzwertes für die erste Drehzahl berechnet, wenn das System in die zweite Kategorie klassifiziert und die verfügbare Leistung P_{AV} größer ist als der zweite Schwellenwert.

9. System nach einem der Ansprüche 1 bis 8, bei dem die erste (31) und die zweite (4) Steuereinheit unabhängig arbeiten.

10. System nach einem der Ansprüche 1 bis 9, bei dem das Getriebe (30) ein stufenlos veränderbares Ringgetriebe ist.

11. System nach einem der Ansprüche 1 bis 10, bei dem das Getriebe (30) eine Welle (11), die den Antrieb erzeugt, und ein Schwungrad (8) großer Trägheit enthält, das auf der Welle (11) angebracht ist.

12. System nach einem der Ansprüche 6 bis 11, bei dem die Quelle (2) eine Brennkraftmaschine und die Vorrichtung (5) ein elektrischer Generator ist.

13. Verfahren zum Steuern eines veränderbaren Getriebes (30), das ein veränderbares Übersetzungsverhältnis hat und einen veränderbaren Abtrieb einer veränderbaren mechanischen Kraftquelle (2) in einen Antrieb, der einen gewünschten Drehzahlwert hat, für eine Vorrichtung (5) umwandelt, wobei das Verfahren folgende Schritte umfasst:
Beziehen einer ersten Drehzahl des veränderbaren Abtriebs, die auch als Maschinendrehzahl Vₑ definiert ist, einer zweiten Drehzahl des Antriebs, die auch als Generatordrehzahl V_{gen} definiert ist, und eines Leistungsbedarfs P_{dem} der Vorrichtung;
Berechnen einer verfügbaren Leistung P_{AV} auf der Basis der ersten Drehzahl und des Leistungsbedarfs P_{dem}, eines Stabilitätsniveaus des Antriebs der Vorrichtung auf der Basis der zweiten Drehzahl und der verfügbaren Leistung P_{AV}, eines gewünschten Übersetzungsverhältnisses des Getriebes (30) auf der Basis des Leistungsbedarfs P_{dem} und einer gewünschten Rate der Übersetzungsverhältnisänderung auf der Basis des Stabilitätsniveaus;
Anweisen des Getriebes, zu dem gewünschten Übersetzungsverhältnis mit der gewünschten Rate der Übersetzungsverhältnisänderung zu wechseln; und
Ändern der ersten Drehzahl, bis die zweite Drehzahl im wesentlichen gleich dem gewünschten Drehzahlwert ist.

14. Verfahren nach Anspruch 13, weiterhin umfassend: Berechnen eines gewünschten Maximalleistungswertes Pₘₐₓ der Quelle (2) auf der Basis des Leistungsbedarfes P_{dem}, Extrahieren eines gewünschten Wertes für die erste Drehzahl aus einer Datentabelle auf der Basis des gewünschten Maximalleistungswertes Pₘₐₓ und Berechnen des gewünschten Übersetzungswertes auf der Basis des gewünschten Wertes für die erste Drehzahl.

15. Verfahren nach Anspruch 13, bei dem bei einem gegebenen Stabilitätsniveau und bei einer verfügbaren Leistung P_{AV}, die höher ist als ein gegebener Schwellenwert, ein gewünschter Wert für die erste Drehzahl aus einer Datentabelle auf der Basis des Leistungsbedarfes P_{dem} extrahiert wird, wobei der gewünschte Wert eine energieeffiziente Drehzahl der Quelle (2) repräsentiert, während die verfügbare Leistung P_{AV} auf einem gewünschten Pegel gehalten wird.

## Revendications

1. Système pour transformer une sortie variable d'une source variable de puissance mécanique (2) en une entrée ayant une valeur de vitesse désirée pour un appareil (5), le système comprenant :
une transmission (30) recevant la sortie variable et produisant l'entrée, la transmission ayant un rapport variable entre une première vitesse de la sortie, définie également comme vitesse moteur Vₑ, et une seconde vitesse de l'entrée, définie également comme vitesse générateur V_{gen} ;
au moins un capteur (12, 10, 7) produisant des données de première vitesse correspondant à la première vitesse, des données de seconde vitesse correspondant à la seconde vitesse, et des données de demande de puissance correspondant à une demande de puissance de l'appareil ;
un premier contrôleur (31) recevant les données de première vitesse, les données de seconde vitesse et les données de demande de puissance, calculant une puissance disponible et une valeur de rapport de transmission désirée sur la base des données de première vitesse et des données de demande de puissance, classant le système dans une parmi au moins de première et deuxième catégories sur la base d'une première comparaison de la seconde vitesse à une plage fixée incluant la valeur de vitesse désirée et d'une seconde comparaison de la puissance disponible à au moins une valeur de seuil, ordonnant à la transmission d'amener rapidement le rapport variable jusqu'à la valeur de rapport de transmission désirée lorsque le système est dans la première catégorie, et ordonnant à la transmission d'amener progressivement le rapport variable jusqu'à la valeur de rapport de transmission désirée lorsque le système est dans la deuxième catégorie ; et
un second contrôleur (4) recevant les données de seconde vitesse et envoyant un signal de correction de vitesse à la source de puissance mécanique pour changer la première vitesse jusqu'à ce que les données de seconde vitesse correspondent à la valeur de vitesse désirée.

2. Système selon la revendication 1, dans lequel le premier contrôleur (31) classe le système dans une parmi la première catégorie, la deuxième catégorie et une troisième catégorie sur la base des première et seconde comparaisons, et le premier contrôleur (31) s'abstient d'ordonner à la transmission de changer le rapport variable lorsque le système est dans la troisième catégorie.

3. Système selon la revendication 2, dans lequel le premier contrôleur (31) classe le système dans la troisième catégorie lorsque la seconde vitesse est supérieure à la plage fixée.

4. Système selon l'une quelconque des revendications 2 et 3, dans lequel le premier contrôleur (31) classe le système dans la troisième catégorie lorsque la première vitesse est en dessous de la plage fixée et que la puissance disponible P_{AV} est supérieure à la au moins une valeur de seuil.

5. Système selon l'une quelconque des revendications 1 à 4, dans lequel le premier contrôleur (31) classe le système dans la première catégorie lorsque la première vitesse est en dessous de la plage fixée et que la puissance disponible P_{AV} est inférieure à la au moins une valeur de seuil.

6. Système selon l'une quelconque des revendications 1 à 5, dans lequel le premier contrôleur (31) classe le système dans la première catégorie lorsque la première vitesse est dans la plage fixée et que la puissance disponible P_{AV} est inférieure à la au moins une valeur de seuil.

7. Système selon l'une quelconque des revendications 1 à 6, dans lequel la au moins une valeur de seuil inclut une première valeur de seuil, et dans lequel le premier contrôleur (31) classe le système dans la deuxième catégorie lorsque la seconde vitesse est dans la plage fixée et que la puissance disponible P_{AV} est supérieure à la première valeur de seuil.

8. Système selon la revendication 7, dans lequel la au moins une valeur de seuil inclut en outre une seconde valeur de seuil supérieure à la première valeur de seuil, et le premier contrôleur (31) calcule une valeur énergétiquement efficace pour la première vitesse sur la base des données de demande de puissance et calcule la valeur de rapport de transmission désirée sur la base de la valeur énergétiquement efficace pour la première vitesse lorsque le système est classé dans la deuxième catégorie et que la puissance disponible P_{AV} est supérieure à la seconde valeur de seuil.

9. Système selon l'une quelconque des revendications 1 à 8, dans lequel les premier (31) et second (4) contrôleurs fonctionnent indépendamment.

10. Système selon l'une quelconque des revendications 1 à 9, dans lequel la transmission (30) est une transmission toroïdale à variation continue.

11. Système selon l'une quelconque des revendications 1 à 10, dans lequel la transmission (30) inclut un arbre (11) produisant une entrée et un volant à haute inertie (8) monté sur l'arbre (11).

12. Système selon l'une quelconque des revendications 6 à 11, dans lequel la source (2) est un moteur à combustion interne et l'appareil (5) est un générateur électrique.

13. Procédé pour commander une transmission variable (30) ayant un rapport variable et transformer une sortie variable d'une source variable de puissance mécanique (2) en une entrée ayant une valeur de vitesse désirée pour un appareil (5), le procédé comprenant les étampes :
obtenir une première vitesse de la sortie variable, définie également comme vitesse moteur Vₑ, une seconde vitesse de l'entrée, définie également comme vitesse générateur V_{gen}, et une demande de puissance P_{dem} de l'appareil ;
calculer une puissance disponible P_{AV} sur la base de la première vitesse et de la demande de puissance P_{dem}, un niveau de stabilité de l'entrée de l'appareil (5) sur la base de la seconde vitesse et de la puissance disponible P_{AV}, un rapport désiré de la transmission (30) sur la base de la demande de puissance P_{dem}, et un régime désiré de changement de rapport sur la base du niveau de stabilité ;
ordonner à la transmission de passer au rapport désiré à la vitesse désirée de changement de rapport ; et
faire varier la première vitesse jusqu'à ce que la seconde vitesse soit sensiblement égale à la valeur de vitesse désirée.

14. Procédé selon la revendication 13, comprenant en outre :
calculer une valeur de puissance maximale désirée Pₘₐₓ de la source (2) sur la base de la demande de puissance P_{dem}, extraire une valeur désirée pour la première vitesse d'une table de données sur la base de la valeur de puissance maximale désirée Pₘₐₓ, et calculer la valeur de transmission désirée sur la base de la valeur désirée pour la première vitesse.

15. Procédé selon la revendication 13, dans lequel, à un niveau de stabilité donné et avec la puissance disponible P_{AV} supérieure à un seuil donné, une valeur désirée pour la première vitesse est extraite d'une table de données sur la base de la demande de puissance P_{dem}, la valeur désirée représentant une vitesse énergétiquement efficace de la source (2) tout en maintenant la puissance disponible P_{AV} à un niveau désiré.
